# EUROPEAN PATENT APPLICATION

(11) **EP 4 822 867 A1**
(43) Date of publication of application: **14.10.2026**
(21) Application number: 25861099.7
(22) Date of filing: 20.08.2025
(51) Int. Cl.: H01M 50/383, H01M 50/273, H01M 50/342, H01M 50/249

(54) **BATTERY PACK**

(30) Priority: 26.08.2024 KR 20240114173
(71) Applicant: LG Energy Solution, Ltd., Seoul 07335 (KR)
(72) Inventor: PARK, Seong-Jae, Daejeon 34122 (KR)
(74) Representative: BCKIP Part mbB
(86) International application number: PCT/KR2025/012649
(87) International publication number: WO 2026/049402

(57) **Abstract**

Disclosed is a battery pack. The battery pack includes a case providing a space therein and having a pack cover; a battery stack located within the case and having a plurality of battery cells; a top cover located between the battery stack and the pack cover; and an insulation cover having a top part coupled to an upper surface of the top cover and a first side part configured to cover one side of the battery stack.

## Description

### TECHNICAL FIELD

The present disclosure relates to a battery pack.

The present application claims priority to Korean Patent Application No. 10-2024-0114173 filed on August 26, 2024 in the Republic of Korea, the disclosure of which is incorporated herein by reference.

### BACKGROUND ART

As the demand for portable electronic products such as smartphones, tablet PCs, and smart watches increases significantly and electric vehicles become increasingly widespread, research is being actively conducted on batteries installed in these vehicles, especially secondary batteries that allow repeated charging and discharging.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be referred to as a battery cell. In addition, multiple battery modules may be connected to each other to form a battery pack.

However, when a battery pack includes a plurality of battery modules and each battery module includes a plurality of battery cells, it may be vulnerable to a thermal chain reaction between battery modules or between battery cells. For example, when an event such as thermal runaway occurs within a single battery module, the thermal runaway must be suppressed from propagating to other battery modules or other battery cells. If the propagation of thermal runaway between battery modules or battery cells is not properly suppressed, an event occurring in a specific battery module or battery cell may cause a chain thermal reaction in other battery modules or other battery cells, potentially causing an explosion or fire or increasing its scale.

In particular, when an event such as thermal runaway occurs in a single battery module, gas or flame may be randomly discharged to the outside. If the discharge of gas or flame is not properly controlled, the gas or flame may be discharged toward other battery modules, potentially causing a thermal chain reaction in the other battery modules. In particular, a module terminal may be present at the front side of the battery module, and a component such as a module bus bar for electrical connection with other battery modules or battery packs may be present. Therefore, if flame is discharged to the front side of the battery module, the module terminals may be damaged and an electrical short may occur within the battery pack. In addition, since other battery modules may be present at the front side of the battery module, if flame is discharged to the front side of a specific battery module, the discharged flame may be directed to other battery modules, easily causing a fire to spread between battery modules.

If thermal transfer between battery modules or battery cells is not properly controlled, a sudden voltage drop may occur in the battery module or battery pack. This may lead to a sudden shutdown of the device in which the battery module or battery pack is mounted, resulting in unexpected damage. For example, if a voltage drop occurs suddenly in a battery pack while an electric vehicle is in operation, there is no time to move the vehicle to a safe location.

Furthermore, if thermal propagation between battery modules or cells is not properly controlled to cause a sudden fire or explosion, there is a high possibility of causing casualties to the users. For example, when thermal runaway occurs in an electric vehicle, if a certain amount of time is not allowed before a full-blown fire develops, occupants may not be able to safely escape.

### DISCLOSURE

### Technical Problem

The present disclosure is designed to solve the problems of the related art, and therefore the present disclosure is directed to providing a battery pack with an improved structure so that the emission of flame and the like generated inside a battery module may be appropriately controlled, and a vehicle including the same.

In addition, the present disclosure is directed to providing a structure that may block the propagation of a thermal event when a thermal event occurs.

In addition, the present disclosure may improve the productivity of a battery pack by providing a battery pack having a battery unit with a simpler structure than a battery module.

In addition, the present disclosure may improve the energy density of a battery pack by providing a battery pack having a battery unit with a smaller weight than a battery module with the same energy capacity.

However, the technical problems that the present disclosure seeks to solve are not limited to the problems described above, and other problems not mentioned herein will be clearly understood by those skilled in the art from the following description.

### Technical Solution

In one aspect of the present disclosure, there is provided a battery pack comprising: a case providing a space therein and having a pack cover; a battery stack located within the case and having a plurality of battery cells; a top cover located between the battery stack and the pack cover; and an insulation cover having a top part coupled to an upper surface of the top cover and a first side part configured to cover one side of the battery stack.

In addition, the insulation cover may include a second side part configured to cover the other side of the battery stack, and the battery stack may be located between the first side part and the second side part.

In addition, the top part, the first side part and the second side part may be formed integrally.

In addition, the case may include a base plate on which the battery stack is placed, and the battery pack may further comprise a first partition wall configured to cover the first side part and fastened to the base plate.

In addition, the battery pack may further comprise a second partition wall configured to cover the second side part and fastened to the base plate.

In addition, the top cover may have a first venting hole.

In addition, the battery pack may further comprise an inner cover located between the top cover and the battery stack.

In addition, the inner cover may have a score line facing the first venting hole.

In addition, the top part may have a second venting hole facing the first venting hole.

In another aspect of the present disclosure, there is also provided a vehicle, comprising the battery pack according to the present disclosure.

### Advantageous Effects

According to at least one of the embodiments of the present disclosure, when gas or flame is generated inside the battery module, the emission of such gas or flame may be appropriately controlled.

According to at least one of the embodiments of the present disclosure, the electrical safety of the battery pack may be improved.

According to at least one of the embodiments of the present disclosure, propagation of a thermal event may be suppressed.

According to at least one of the embodiments of the present disclosure, the productivity of a battery pack may be improved.

According to at least one of the embodiments of the present disclosure, the energy density of a battery pack may be improved.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing showing a battery pack according to an embodiment of the present disclosure.
FIG. 2 is an exploded view showing some components of the battery pack of FIG. 1.
FIG. 3 is a drawing showing the battery unit of FIG. 2.
FIG. 4 is an exploded view showing some components of the battery unit of FIG. 3.
FIG. 5 is an exploded view showing some components of the battery stack of FIG. 4.
FIG. 6 is a drawing showing that the battery stack, the bus bar frame assembly, and the insulation cover are coupled.
FIG. 7 is a drawing showing that the inner cover is coupled with the configuration of FIG. 6.
FIG. 8 is a drawing showing that the top cover is coupled with the configuration of FIG. 7.
FIG. 9 is a drawing showing that the insulation cover is coupled with the configuration of FIG. 8.
FIG. 10 is a drawing showing that the partition wall is coupled with the configuration of FIG. 9.
FIG. 11 is a cross-sectional view taken along the line A-A' of FIG. 3.
FIG. 12 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

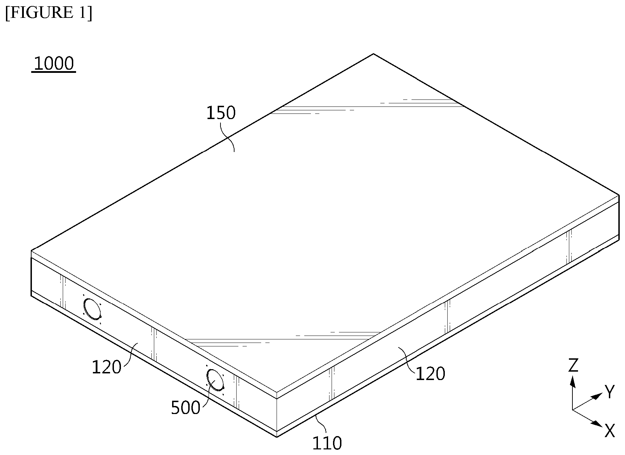

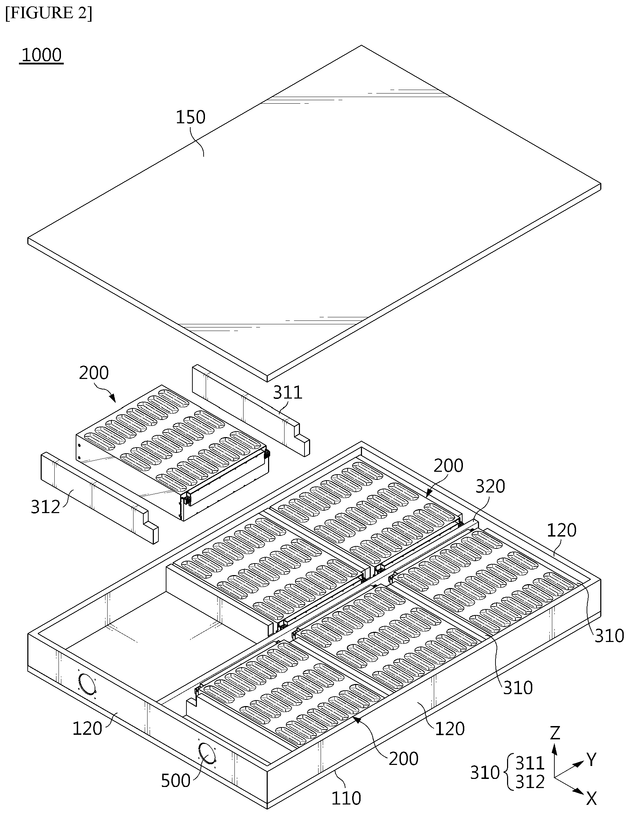

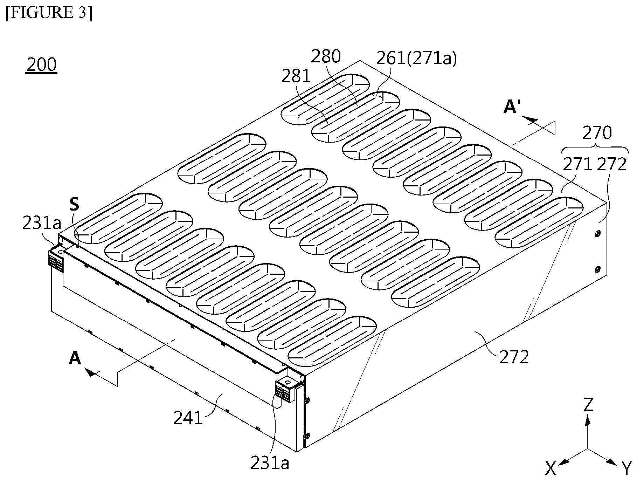

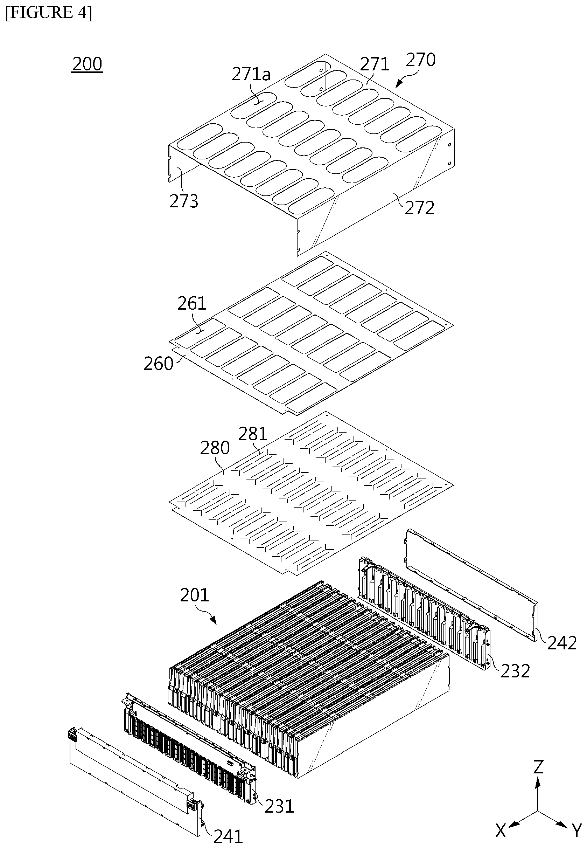

FIG. 1 is a drawing showing a battery pack 1000 according to an embodiment of the present disclosure. FIG. 2 is an exploded view showing some components of the battery pack 1000 of FIG. 1. FIG. 3 is a drawing showing the battery unit 200 of FIG. 2. FIG. 4 is an exploded view showing some components of the battery unit 200 of FIG. 3.

Referring to FIGS. 1 to 4, the battery pack 1000 may include a case 100. The case 100 may include a base plate 110. The base plate 110 may have a square shape. The base plate 110 may have a flat plate shape. The base plate 110 may form the outer appearance of the battery pack 1000. The base plate 110 may provide an inner space of the battery pack 1000.

The case 100 may include a side wall 120. The side wall 120 may be installed, fastened, coupled, fixed, or attached to the upper surface of the base plate 110. Four side walls 120 may be provided. The side wall 120 may be arranged along the perimeter of the base plate 110. The side wall 120 may form the outer appearance of the battery pack 1000. The side wall 120 may provide an inner space.

The battery pack 1000 may include a battery unit 200. The battery unit 200 may have a rectangular parallelepiped shape. The battery unit 200 may be provided in plurality. The plurality of battery units 200 may be located inside the case 100. The plurality of battery units 200 may be installed, coupled, fastened, fixed, or attached to the base plate 110.

The battery unit 200 may include a battery stack 201. The battery stack 201 may include a plurality of battery cells 220. In this case, the battery cell 220 may refer to a secondary battery. In particular, the battery cell 220 may be a secondary battery having a pouch shape. However, the shape of the battery cell 220 is not limited to a pouch shape, and the battery cell 220 may have various shapes such as a cylindrical shape or a rectangular parallelepiped shape. The plurality of battery stacks 201 may be installed, coupled, fastened, fixed, or attached to the base plate 110.

Each battery cell 220 may extend along the front and rear direction or the X-axis direction. The plurality of battery cells 220 may be stacked along the right and left direction or the Y-axis direction. The plurality of battery cells 220 may be stacked to form the battery stack 201.

The case 100 may include a pack cover 150. The pack cover 150 may have a square plate shape. The pack cover 150 may have a flat plate shape. The pack cover 150 may form the outer appearance of the battery pack 1000. The pack cover 150 may cover the inner space of the battery pack 1000. The pack cover 150 may be located on the battery unit 200. The pack cover 150 may be located on the battery stack 201.

The battery unit 200 may include a top cover 260. The top cover 260 may be located on the battery stack 201. The top cover 260 may be located between the battery stack 201 and the pack cover 150.

The battery unit 200 may contain an insulation cover 270. The insulation cover 270 may contain a material with low thermal conductivity. The insulation cover 270 may contain a material with high heat resistance. The insulation cover 270 may contain a material with high fire resistance. The insulation cover 270 may contain a material with high heat dissipation performance.

The insulation cover 270 may surround the battery stack 201. The insulation cover 270 may include a top part 271. The top part 271 may have a sheet shape. The top part 271 may be located on the top cover 260. The top part 271 may be fastened, coupled, attached, installed, or fixed to the upper surface of the top cover 260.

The insulation cover 270 may include a first side part 272. The first side part 272 may cover one side of the battery stack 201. The first side part 272 may cover the right side of the battery stack 201. The top part 271 and the first side part 272 may be formed integrally. The first side part 272 may extend downward or along the -Z-axis direction from the top part 271.

When a thermal event occurs from the battery cell 220, the insulation cover 270 may suppress or block heat transfer. The insulation cover 270 may suppress or block heat from propagating to neighboring battery units 200 or battery stacks 201. The insulation cover 270 may improve the thermal safety of the battery unit 200. The insulation cover 270 may improve the thermal safety of the battery pack 1000.

Referring to FIGS. 1 to 4, the battery pack 1000 may include a venting device 500. The venting device 500 may be installed on the side wall 120. For example, the venting device 500 may be installed on the side wall 120 at the front. For example, the venting device 500 may be a gas valve. The venting device 500 may open to discharge gas when the pressure inside the case 100 increases. In addition, the venting device 500 may block external air from flowing into the case 100. The venting device 500 may be provided in plurality.

The battery pack 1000 may include a partition wall 310. The partition wall 310 may include a first partition wall 311 and a second partition wall 312. The partition wall 310 may be provided in plurality. The partition wall 310 may be installed, fastened, fixed, coupled, or attached to the upper surface of the base plate 110. The partition wall 310 may partition the inner space of the battery pack 1000. The partition wall 310 may be installed, fastened, fixed, coupled or attached to the inner surface of the side wall 120. The partition wall 310 may be provided at both sides of battery unit 200, respectively.

The battery pack 1000 may include a center partition wall 320. The center partition wall 320 may be installed, fastened, fixed, coupled, or attached to the upper surface of the base plate 110. The center partition wall 320 may partition the inner space of the battery pack 1000. The center partition wall 320 may be installed, fastened, fixed, coupled, or attached to the inner surface of the side wall 120.

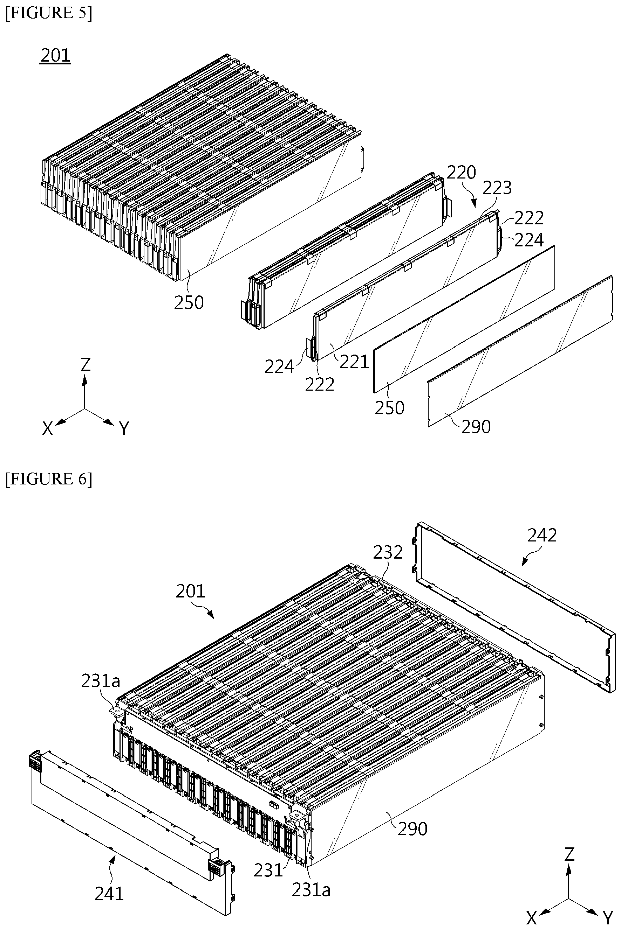

FIG. 5 is an exploded view showing some components of the battery stack 201 of FIG. 4. Referring to FIGS. 1 to 5, the battery stack 201 may include a battery cell 220. The battery cell 220 may include an accommodation portion 221 having an electrode assembly, a first sealing portion 222 protruding to the front and rear sides of the accommodation portion 221, and a second sealing portion 223 protruding upward from the accommodation portion 221. In addition, the battery cell 220 may include an electrode lead 224 protruding to the front and rear sides of the first sealing portion 222, respectively. Each battery cell 220 may extend along the front and rear direction or the X-axis direction. The electrode lead 224 may protrude to the front and rear sides of each battery cell 220.

The battery stack 201 may include a pad 250. The pad 250 may be disposed between the plurality of battery cells 220. The pad 250 may be arranged between at least some of the battery cells 220 and/or at the periphery of the stack. For example, the pad 250 may be configured to be arranged between every four battery cells 220 stacked in the front and rear direction.

The pad 250 may contain an elastic material to enable swelling absorption of the battery cell 220. For example, the pad 250 may contain a foam material such as polyurethane. Alternatively, the pad 250 may contain a material capable of blocking heat or flame. For example, the pad 250 may contain with an insulating or fire-retardant material such as silicone or mica.

The battery stack 201 may include an insulation sheet 290. The insulation sheet 290 may be arranged at the outermost side of the battery stack 201. The insulation sheet 290 may contain a material having electrical insulation properties. The insulation sheet 290 may be provided at both sides of the battery stack 201.

FIG. 6 is a drawing showing that the battery stack 201, the bus bar frame assembly 231, 232, and the insulation cover 241, 242 are coupled. Referring to FIGS. 4 to 6, the front bus bar frame assembly 231 may be electrically connected to the front electrode leads 224 of the battery stack 201. The front bus bar frame assembly 231 may include a power terminal 231a. The power terminal 231a may be electrically connected to the plurality of battery cells 220. The power terminal 231a may be provided in a pair. The power terminal 231a may be exposed to the outside of the battery unit 200. The power terminal 231a may be electrically connected to another battery unit 200 or a BMS (Battery Management System).

The rear bus bar frame assembly 232 may be electrically connected to the rear electrode lead 224 of the battery stack 201. The rear bus bar frame assembly 232 may cover the rear side of the accommodation portion 221.

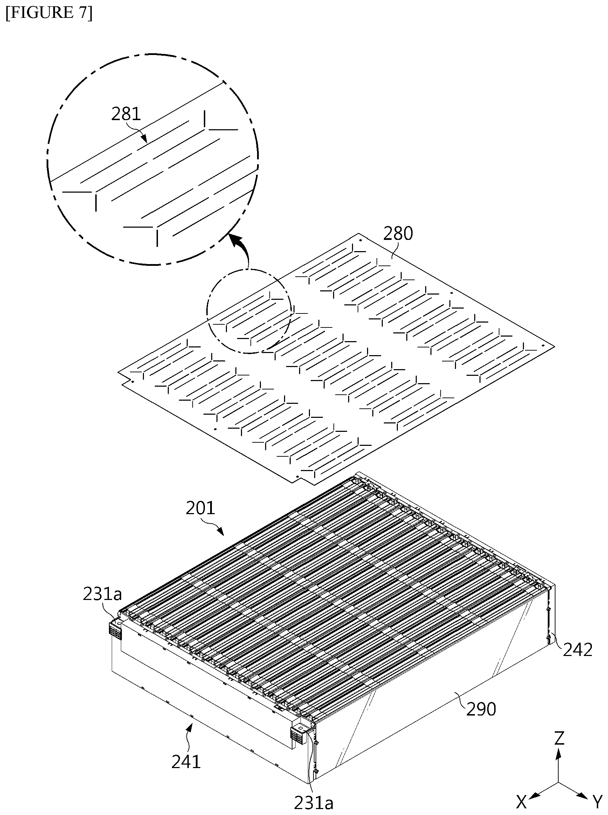

FIG. 7 is a drawing showing that the inner cover 280 is coupled with the configuration of FIG. 6. Referring to FIGS. 6 and 7, the front insulation cover 241 may cover the front bus bar frame assembly 231. The front insulation cover 241 may be coupled, fastened, fixed, installed, or attached to the front bus bar frame assembly 231. The front insulation cover 241 may contain a material having electrical insulation properties. The front insulation cover 241 may expose the power terminal 231a.

The rear insulation cover 242 may cover the rear bus bar frame assembly 232. The rear insulation cover 242 may be coupled, fastened, fixed, installed, or attached to the rear bus bar frame assembly 232. The rear insulation cover 242 may contain a material having electrical insulation properties.

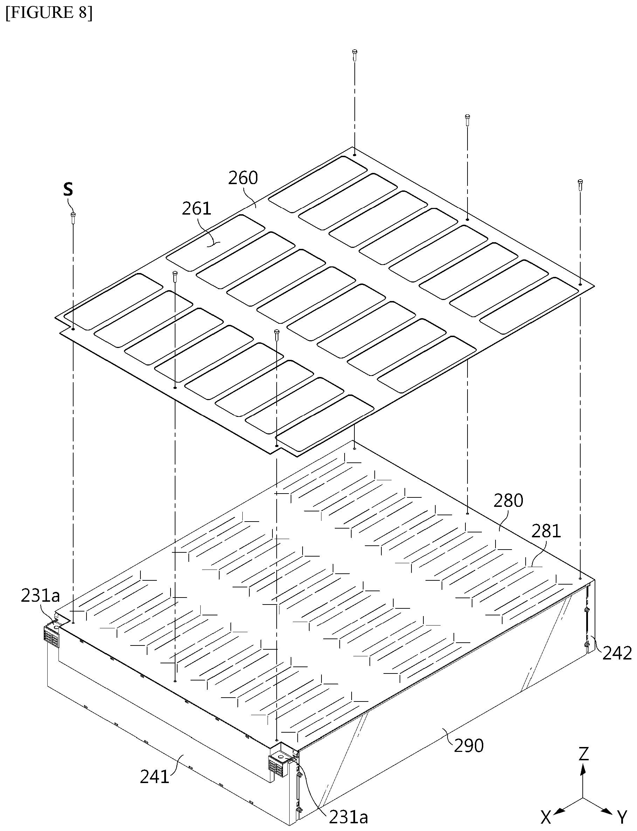

FIG. 8 is a drawing showing that the top cover 260 is coupled with the configuration of FIG. 7. Referring to FIGS. 7 and 8, the inner cover 280 may be located between the top cover 260 and the battery stack 201. The inner cover 280 may have a sheet shape. The inner cover 280 may cover the upper surface of the battery stack 201. The inner cover 280 may be fixed, coupled, fastened, or attached to the upper end of the bus bar frame assembly 231, 232. The inner cover 280 may be fixed, coupled, fastened, or attached to the upper end of the insulation cover 241, 242.

The inner cover 280 may be coupled, fastened, attached, or fixed to the lower surface of the top cover 260. The inner cover 280 may contain a fire-resistant material. The inner cover 280 may contain a heat-resistant material. The inner cover 280 may contain a flame-retardant material. For example, the inner cover 280 may contain a ceramic material. The inner cover 280 may contain a fireproof material.

The inner cover 280 may include a score line 281. The score line 281 may be used as a term including and collectively referring to a perforated line 281, a notching line 281, a cutting line 281, a shredding line 281, a tear line 281, or a separation line 281. The score line 281 may be configured to be easily separated by a pressure applied to the inner cover 280.

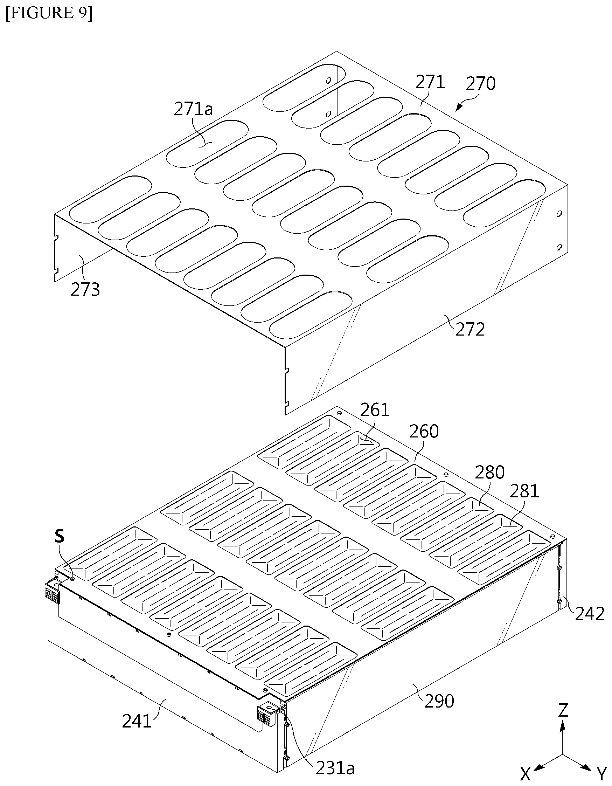

FIG. 9 is a drawing showing that the insulation cover 270 is coupled with the configuration of FIG. 8. Referring to FIGS. 8 and 9, the top cover 260 may be fixed, coupled, fastened, or attached to the upper end of the bus bar frame assembly 231, 232. The top cover 260 may be fixed, coupled, fastened, or attached to the upper end of the insulation cover 241, 242. The top cover 260 may contain a plastic material.

The fastening member S may fasten the top cover 260 to the insulation cover 241, 242. The fastening member S may fasten the inner cover 280 to the insulation cover 241, 242. The fastening member S may penetrate the top cover 260 and the inner cover 280.

The top cover 260 may have a first venting hole 261. The first venting hole 261 may be provided in plurality. The first venting hole 261 may face the score line 281. The first venting hole 261 may expose the score line 281. The score line 281 may be provided in a one-to-one correspondence with the first venting hole 261.

If a thermal event occurs from the battery cell 220, the venting gas may separate the score line 281. This may cause the inner cover 280 to open. In addition, the venting gas may be discharged to the outside of the battery unit 200 through the first venting hole 261. Meanwhile, if the battery unit 200 is exposed to a venting gas generated from the outside, the inner cover 280 may prevent the venting gas generated at the outside from flowing into the battery unit 200. This may suppress or block the propagation of the thermal event.

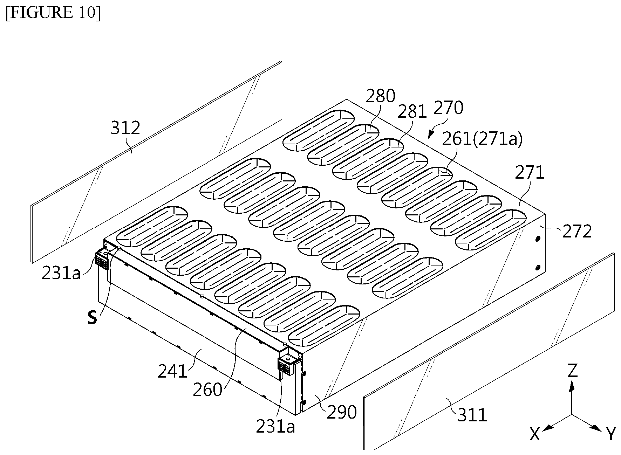

FIG. 10 is a drawing showing that the partition wall 310 is coupled with the configuration of FIG. 9. Referring to FIGS. 9 and 10, the top part 271 may have a second venting hole 271a. The second venting hole 271a may be provided in plurality. The plurality of second venting holes 271a may be provided in a one-to-one correspondence with the plurality of first venting holes 261. The second venting hole 271a may face the first venting hole 261. The second venting hole 271a may expose the score line 281.

If a thermal event occurs outside the battery unit 200, the top part 271 may block heat transfer to the battery unit 200. As a result, the propagation of the thermal event may be suppressed or blocked.

The first side part 272 may be fastened, coupled, attached, or fixed to the right insulation sheet 290. The first side part 272 may cover the right insulation sheet 290. If a thermal event occurs from the battery cell 220, the first side part 272 may block heat transfer in the right direction or +Y-axis direction. This may suppress heat transfer to the neighboring battery units 200.

If a thermal event occurs outside the battery unit 200, the first side part 272 may block heat transfer to the battery unit 200. As a result, propagation of the thermal event may be suppressed or blocked.

The insulation cover 270 may include a second side part 273. The first side part 272 may cover one side of the battery stack 201. The second side part 273 may cover the other side of the battery stack 201. The second side part 273 may cover the left side of the battery stack 201. The top part 271 and the second side part 273 may be formed integrally. The second side part 273 may extend downward or along the -Z-axis direction from the top part 271.

The second side part 273 may be fastened, coupled, attached, or fixed to the left insulation sheet 290. The second side part 273 may cover the left insulation sheet 290. The battery stack 201 may be located between the first side part 272 and the second side part 273. When a thermal event occurs from the battery cell 220, the second side part 273 may block heat transfer in the left direction or -Y-axis direction. As a result, heat propagation to neighboring battery units 200 may be suppressed.

If a thermal event occurs outside the battery unit 200, the second side part 273 may block heat transfer to the battery unit 200. As a result, propagation of the thermal event may be suppressed or blocked.

Referring to FIGS. 2 and 10, the first partition wall 311 may cover the first side part 272. The first partition wall 311 may be fastened, coupled, attached, or fixed to the base plate 110. The first partition wall 311 may be in contact with the first side part 272. The first partition wall 311 may pressurize the first side part 272.

The second partition wall 312 may cover the second side part 273. The second partition wall 312 may be fastened, coupled, attached, or fixed to the base plate 110. The second partition wall 312 may be in contact with the second side part 273. The second partition wall 312 may pressurize the second side part 273.

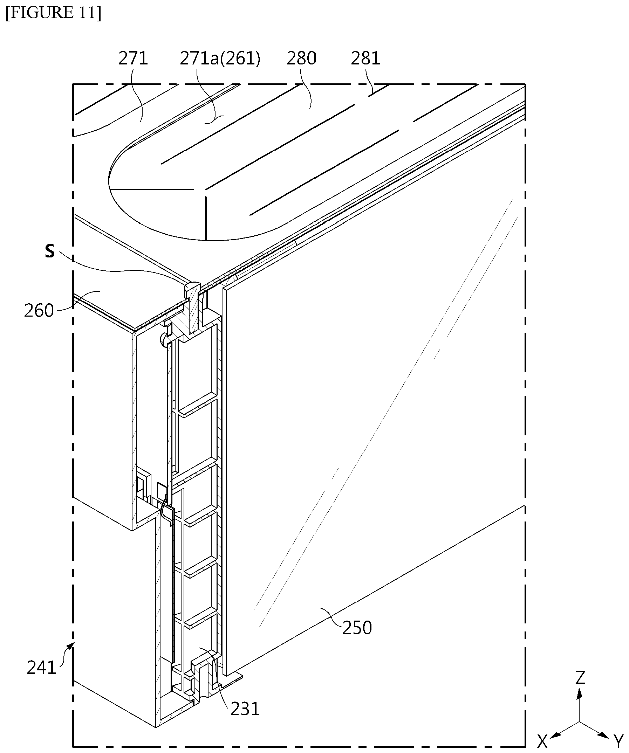

FIG. 11 is a cross-sectional view taken along the line A-A' of FIG. 3. Referring to FIG. 11, the fastening member S may fasten the top cover 260 and the inner cover 280 to the front bus bar frame assembly 231. Since the top cover 260 and the inner cover 280 are fastened to the front bus bar frame assembly 231, when a thermal event occurs, the venting gas may be discharged only through the first venting hole 261 or the second venting hole 271a. As a result, the thermal event may be suppressed from propagating to adjacent battery units 200.

The battery pack 1000 according to the present disclosure may further include various components other than the battery unit 200, such as various components of a battery pack known at the time of filing of this application, for example, a BMS, a bus bar, a relay, a current sensor, etc.

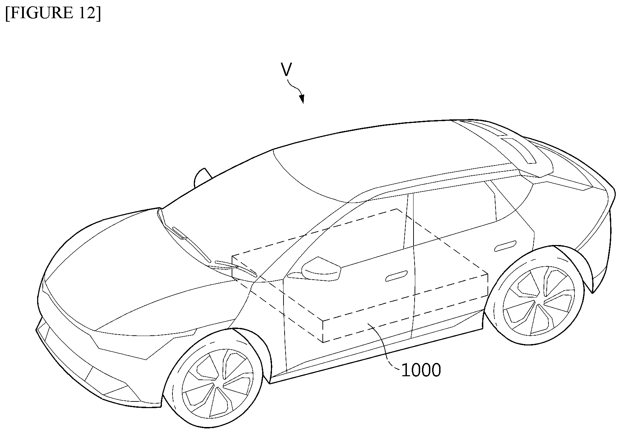

FIG. 12 is a drawing showing a vehicle V according to an embodiment of the present disclosure. Referring to FIG. 12, the vehicle V according to an embodiment of the present disclosure may include the battery pack 1000 of the present disclosure. The battery pack 1000 according to the present disclosure may be applied to a vehicle V, such as an electric vehicle V or a hybrid electric vehicle V. That is, the vehicle V according to the present disclosure may include the battery pack 1000 according to the present disclosure. In addition, the vehicle V according to the present disclosure may further include various other components included in a vehicle in addition to the battery pack 1000. For example, the vehicle V according to the present disclosure may further include a body, a motor, a control device such as an ECU (electronic control unit), etc.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a case providing a space therein and having a pack cover;
a battery stack located within the case and having a plurality of battery cells;
a top cover located between the battery stack and the pack cover; and
an insulation cover having a top part coupled to an upper surface of the top cover and a first side part configured to cover one side of the battery stack.

2. The battery pack according to claim 1,
wherein the insulation cover includes a second side part configured to cover the other side of the battery stack, and
wherein the battery stack is located between the first side part and the second side part.

3. The battery pack according to claim 2,
wherein the top part, the first side part and the second side part are formed integrally.

4. The battery pack according to claim 2,
wherein the case includes a base plate on which the battery stack is placed, and
wherein the battery pack further comprises a first partition wall configured to cover the first side part and fastened to the base plate.

5. The battery pack according to claim 4, further comprising:
a second partition wall configured to cover the second side part and fastened to the base plate.

6. The battery pack according to claim 1,
wherein the top cover has a first venting hole.

7. The battery pack according to claim 6, further comprising:
an inner cover located between the top cover and the battery stack.

8. The battery pack according to claim 7,
wherein the inner cover has a score line facing the first venting hole.

9. The battery pack according to claim 7,
wherein the top part has a second venting hole facing the first venting hole.

10. A vehicle comprising the battery pack according to any one of claims 1 to 9.
